# EUROPÄISCHE PATENTSCHRIFT

(11) **EP 1 535 777 B1**
(45) Veröffentlichungstag und Bekanntmachung des Hinweises auf die Patenterteilung: **10.03.2010**
(21) Anmeldenummer: 04025614.1
(22) Anmeldetag: 28.10.2004
(51) Int. Cl.: B60J 5/04

(54) **Fahrzeugtür**
Vehicle door
Porte de véhicule

(30) Priorität: 29.11.2003 DE 10355932
(43) Veröffentlichungstag der Anmeldung: 01.06.2005
(73) Patentinhaber: MAN Nutzfahrzeuge Aktiengesellschaft, 80995 München (DE)
(72) Erfinder: Engel, Alfred, 82278 Althegnenberg (DE); Schropp, Sven, 85221 Dachau (DE)

(56) Entgegenhaltungen:
- EP-A- 0 152 045
- DE-A1- 19 937 000
- US-A- 3 874 119
- US-A1- 2002 170 235
- US-A1- 2003 001 408

## Beschreibung

Die Erfindung betrifft eine Fahrzeugtür mit einem Türaußenblech, einem mit dem Türaußenblech vorgesehenen Türinnenblech, einem Fensterhebermodul und einer über dem Türinnenblech und dem Fensterhebermodul angeordneten Türinnenverkleidung.

Bei Regenwetter im Fahrbetrieb oder auch bei der Reinigung des Fahrzeugs lässt es sich nicht vermeiden, dass zwischen der Fensterscheibe, insbesondere wenn diese eine bombierte Form hat, die große Fertigungstoleranzen aufweist, und der außenliegenden Dichtung der Fensterführung, Wasser in den Türinnenraum eindringt. Zum Schutz elektrischer Einrichtungen in der Fahrzeugtür ist aus DE 100 11 599 A1 ein Wasserdeflektor bekannt, welcher in den Türinnenraum eingedrungenes Wasser zu Wasserablauföffnungen an der Türunterseite ableitet.

Aus DE 101 55 356 A1 ist ein flächiges Türelement zur Trennung des Trockenraums vom Nassraum im Innern der Kraftfahrzeugtür vorgesehen. Hierbei kann es sich um die Türinnenhaut einer Fahrzeugtür oder um einen Türträgermodul handeln, das auf einen Ausschnitt in der Innenhaut aufgesetzt wird.

Aus der DE 102 01 651 A1 ist ein flächiges Türelement bekannt, das, die Türe versteifend, die Türe in einen Nassraum und einen Trockenraum teilt.

Schließlich ist aus der DE 199 37 00 A 1 zur Aufnahme von Funktionseinheiten einer Kraftfahrzeugtür sowie ein Verfahren zu dessen Herstellung bekannt. Das Trägerelement ist dabei mit einem tragenden Teil der Kraftfahrzeugtür verbindbar und besteht zumindest teilweise aus einem Schaumstoff.

Bedingt durch Verrastöffnungen und Löcher zur Befestigung der Innenverkleidung sowie von Ausstanzungen und Löchern im Fensterhebermodul besteht die Gefahr, dass in den Türinnenraum eingedrungenes Wasser bis zur Türinnenverkleidung und durch die Türinnenverkleidung gelangt.

Aufgabe der Erfindung ist es, eine Fahrzeugtür der eingangs genannten Art zu schaffen, bei welcher der Fahrzeuginnenraum, insbesondere die Türinnenverkleidung, gegen den Eintritt von durch Verrastöffnungen und Löcher für die Befestigung der Türinnenverkleidung und durch Löcher und Ausstanzungen im Fensterhebermodul eingedrungenes Wasser geschützt wird.

Diese Aufgabe wird erfindungsgemäß durch die kennzeichnenden Merkmale des Patentanspruches 1 gelöst.

Hierzu ist zwischen dem Türinnenblech und dem Fensterhebermodul auf der Innenseite und der Türinnenverkleidung auf der anderen Seite ein flächiges Schaumstoffteil, welches sich zumindest über den zu schützenden Bereich der zum Türaußenblech weisende Fläche der Türinnenverkleidung erstreckt, angeordnet ist. Das Schaumstoffteil weist ferner Wasserführungsbereiche auf, die auf dem Schaumstoffteil vorhandenes Wasser zu Wasserablauföffnungen an der Türunterkante bzw. Türunterseite leiten.

Das Schaumstoffteil ist aus geschlossenzelligem Schaumstoff, wobei der Schaumstoff zusätzlich, mindestens auf einer Seite, kaschiert sein kann. Hierdurch erreicht man eine definierte Führung des Wassers in den Nassraum der Tür, aus welchem das Wasser durch die Ablauföffnungen nach außen geleitet wird. Die Ablauföffnungen befinden sich im unteren Bereich des vom Türaußenblech und Türinnenblech gebildeten Türkastens.

Bei der Erfindung sind neben den einbaubedingten Verprägungen, wie sie beispielsweise für den Einbau des Fensterhebermotors und anderer Einbauteile erforderlich sind, im flächigen Schaumstoffteil zusätzliche angeformte Bereiche vorgesehen, welche sowohl eine Wasserführungs- als auch Wasserablauffunktion haben. Diese Wasserführungsbereiche können ebenfalls durch Verprägungen des flächigen Schaumstoffteils gebildet sein. Das flächige Schaumstoffteil kann zusätzliche Funktionen eines Thermoschutzes und akustischer Dämpfung haben.

Die Erfindung eignet sich bevorzugt für die Fahrzeugtür in einem Fahrerhaus eines Nutzfahrzeugs, insbesondere eines Lastkraftwagens oder in einem Omnibus.

Anhand der Figuren wird die Erfindung noch näher erläutert.

Es zeigt
- Fig. 1: eine Ansicht von der Türaußenseite her, ohne Türaußenblech, auf ein flächiges Schaumstoffteil mit eingeformten Wasserführungs- und -ablaufbereichen, welches bei der Erfindung zum Einsatz kommt;
- Fig. 2: eine schnittbildliche Darstellung durch eine Fahrzeugtür mit dem in Fig. 1 dargestellten Schaumstoffteil entlang der Schnittlinie II-II;
- Fig. 3: eine schnittbildliche Darstellung des unteren Teils einer Fahrzeugtür mit dem in Fig. 1 dargestellten Schaumstoffteil entlang der Schnittlinie III-III, und
- Fig. 4: einen Schnitt durch den unteren Teil einer Fahrzeugtür mit dem in Fig. 1 dargestellten Schaumstoffteil entlang der Schnittlinie IV-IV.

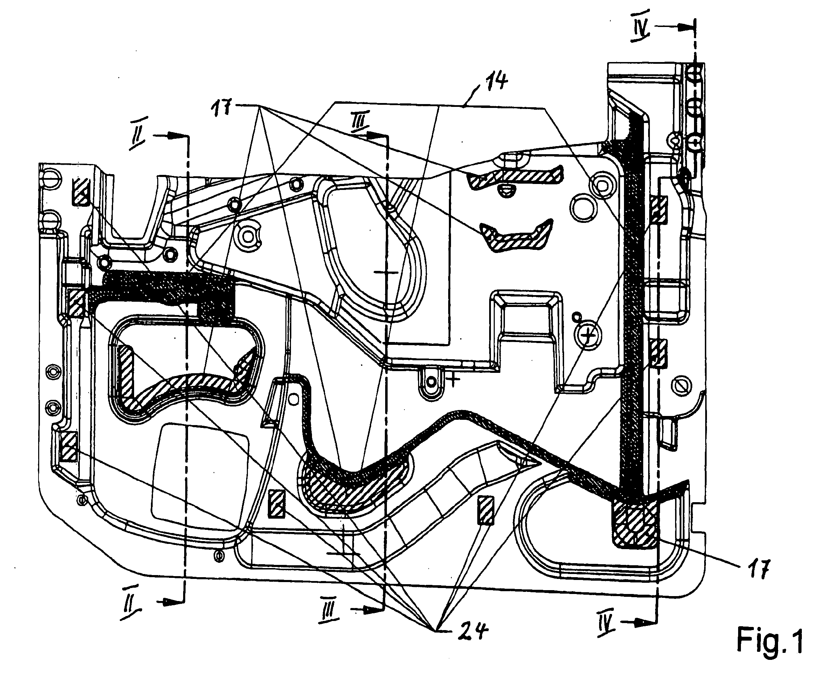

In Fig. 1 ist die Ansicht auf das flächige Schaumstoffteil 13 dargestellt, durch welches der Innenraum einer Fahrzeugtür in einen Trockenraum und einen Nassraum unterteilt wird. Die Ansicht ist von der Türaußenseite her gesehen, ohne dass das Türaußenblech dargestellt ist.

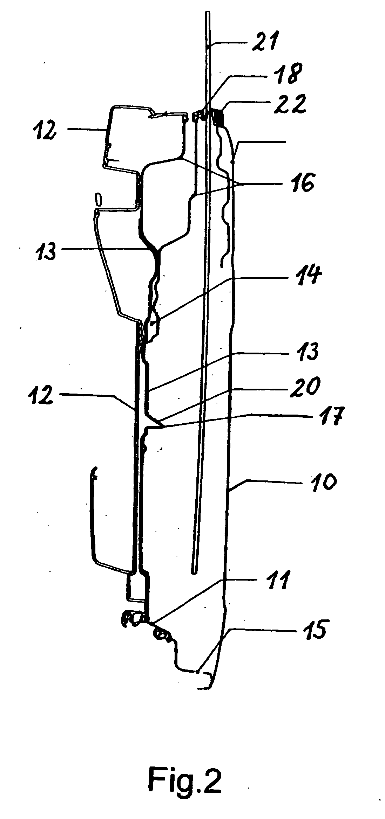

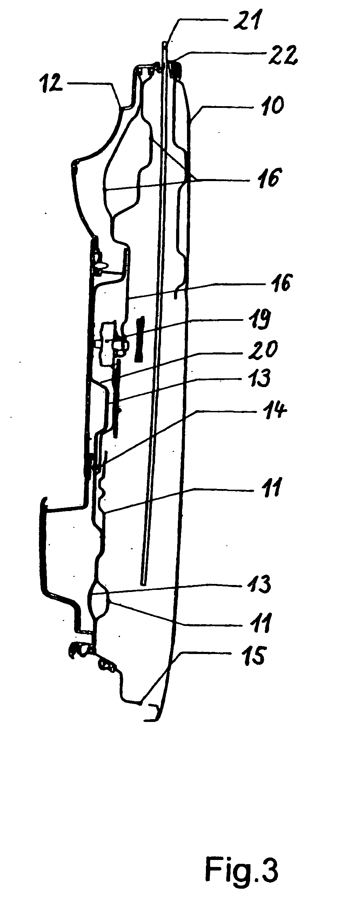

In der Fig. 2 ist entlang einer Schnittlinie II-II der Fig. 1 eine Fahrzeugtür, insbesondere für ein Fahrerhaus eines Nutzfahrzeugs, dargestellt. Diese Tür weist ein Türaußenblech 10 und ein damit verbundenes Türinnenblech 11 auf. Auf einem Ausschnitt des Türinnenblechs sitzt ein Fensterhebermodul 16 auf. Das Fensterhebermodul 16 beinhaltet einen Fensterhebermotor 19 (Fig. 3), welcher zum Anheben und Absenken eines Fahrzeugfensters 21 in bekannter Weise dient. Das Fahrzeugfenster 21 wird zwischen Dichtungen 18, 22 einer Fensterführung in bekannter Weise geführt.

Gegenüber dem Fahrzeuginnern, insbesondere gegenüber dem Inneren des Fahrerhauses des Nutzfahrzeugs ist der Innenraum der Tür durch eine Türinnenverkleidung 12 abgedeckt. Diese Türinnenverkleidung 12 ist am Türinnenblech 11 und dem Fensterhebermodul 16 befestigt. Für die Befestigung der Innenverkleidung 12 sind am Fensterhebermodul 16 und am Türinnenblech 11 Öffnungen und Ausstanzungen zum Verrasten und Befestigen der Türinnenverkleidung 12 vorgesehen.

Bei starkem Regen während des Fahrbetriebs oder während der Reinigung des Fahrzeugs kann zwischen einer außenliegenden Dichtung 22 der Fensterführung und dem Fenster 21 Flüssigkeit in das Türinnere und durch die Verrastöffnungen und Löcher zur Befestigung der Innenverkleidung 12 und Löcher und Öffnungen im Fensterhebermodul 16 somit im Fahrzeuginneren bis zur Türinnenverkleidung 12 eindringen.

Um dies zu vermeiden, wird bei der Erfindung das in Fig. 1 in der Ansicht dargestellte flächige Schaumstoffteil 13 so im Türinneren angeordnet, dass auf der einen Seite des Schaumstoffteils 13 die Türinnenverkleidung 12 und auf der anderen Seite des Schaumstoffteils 13 das Türinnenblech 11 und das Fensterhebermodul 16 liegen.

Die Fig. 3 zeigt den Schnitt III-III aus der Fig. 1. Das Schaumstoffteil 13 weist Verprägungen auf, welche durch den Einbau von Funktionseinbauteilen, wie beispielsweise dem Fensterhebermotor 19 bedingt sind. Neben diesen einbaubedingten Verprägungen besitzt das Schaumstoffteil 13 noch Verprägungen, welche der Führung und dem Ablauf von in das Türinnere eingedrungenem Wasser dienen. Diese Verformungen dienen zur Zurückführung insbesondere des Wassers, welches durch Löcher, Ausstanzungen und Öffnungen zur Befestigung und Verrastung der Innenverkleidung und Öffnungen im Fensterhebermodul 16 eingedrungen ist, in den Nassbereich des Türinneren, in welchem Wasserablauföffnungen 15 vorhanden sind. Diese Wasserablauföffnungen 15 befinden sich an der Unterseite des vom Türinnenblech 11 und Türaußenblech 10 gebildeten Türkastens. Die Wasserführungs- und Wasserablaufbereiche, welche vorzugsweise durch Verprägungen des Schaumstoffteils 13 gebildet werden, können unterschiedliche Formen aufweisen. Sie können beispielsweise in Form von Wasserführungskanälen 14 oder in Form von Wasserablaufnasen 17 vorliegen. Die Wasserführungskanäle 14 können einen horizontal leicht geneigten, einen schrägen sowie vertikalen Verlauf haben (Fig. 1). Insbesondere im rückwärtigen Türbereich, also im Türschlossbereich, befindet sich ein annähernd über die gesamte Höhe des Türkastens sich erstreckender Wasserführungskanal 14. In den Wasserführungskanälen 14 wird das Wasser zu Ablaufschrägen 20, welche an den Wasserablaufnasen 17 vorhanden sind, geleitet.

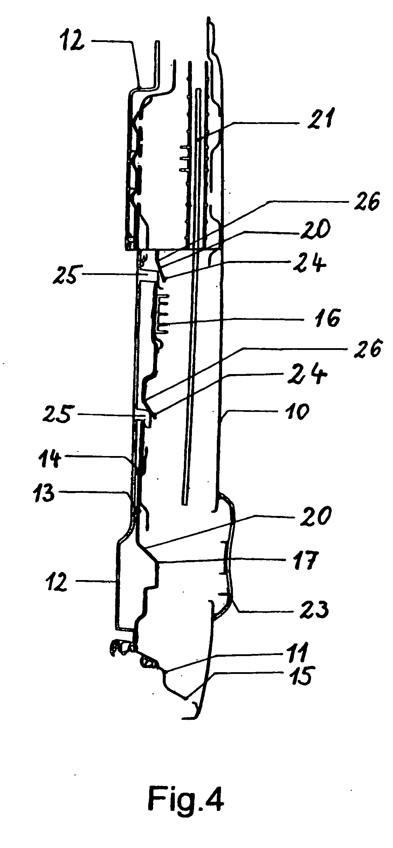

Die Fig. 4 zeigt den Schnittverlauf IV-IV aus der Fig. 1. Die Wasserablaufschrägen 20 sind hier an teilweise ausgestanzten Schaumstoffteilen 24, welche über einen Scharnierbereich 26 mit dem flächigen Sehaumstoffteil 13 schwenkbar verbunden bleiben, dargestellt Diese liegen, wie in dieser Fig. zu ersehen ist, über Verrastungsvorsprüngen 25 oder Rastnasen 25 der Türinnenverkleidung 12, welche über die entsprechende Ebene des flächigen Schaumstoffteils 13 hinausragen. Die Wasserablaufschrägen 20 an den Wasserablaufnasen 17 und den teilweise ausgestanzten Schaumstoffteilen 24 sind so geneigt, dass das Wasser in den unteren Teil des Türkastens, in welchem sich die Wasserablauföffnungen 15 befinden, definiert geleitet wird.

Weiterhin ist in Fig. 4 der Türaußengriff 23 dargestellt, der mit dem Türaußenblech 10 verbunden ist.

### Bezugszeichenliste

- 10: Türaußenblech
- 11: Türinnenblech
- 12: Türinnenverkleidung
- 13: Schaumstoffteil
- 14: Wasserführungskanal
- 15: Wasserablauföffnungen
- 16: Fensterhebermodul
- 17: Wasserablaufnase
- 18: innenliegende Dichtung
- 19: Fensterhebermotor
- 20: Wasserablaufschrägen
- 21: Fenster
- 22: außen liegende Dichtung
- 23: Türaußengriff
- 24: teilweise ausgestanzte Schaumstoffteile
- 25: Verrastungsvorsprünge
- 26: Scharnierbereich des Schaumstoffteils

## Patentansprüche

1. Fahrzeugtür mit einem Türaußenblech, einem mit dem Türaußenblech verbundenen Türinnenblech, einem Fensterhebermodul und einer über dem Türinnenblech und dem Fensterhebermodul angeordneten Türinnenverkleidung, **dadurch gekennzeichnet, dass** zwischen dem Türinnenblech (11) und dem Fensterhebermodul (16) auf der einen Seite und der Türinnenverkleidung (12) auf der anderen Seite ein flächiges Schaumstoffteil (13) aus geschlossenzelligem Schaumstoff der zusätzlich kaschiert sein kann, angeordnet ist und dass das Schaumstoffteil (13) Wasserführungsbereiche (14, 17, 20, 24) aufweist, die auf dem Schaumstoffteil (13) vorhandenes Wasser zu Wasserablauföffnungen (15) an der Türunterkante leiten, wobei die Wasserführungsbereiche als Verprägungen (14, 17) des Schaumstoffteils (13) und als teilweise ausgestanzte Schaumstoffteile (24), welche schwenkbar mit dem Schaumstoffteil (13) verbunden sind, ausgebildet sind.

2. Fahrzeugtür nach Anspruch 1, **dadurch gekennzeichnet, dass** die Wasserführungsbereiche (14, 17, 20, 24) am flächigen Schaumstoffteil (13) angeformt sind.

3. Fahrzeugtür nach einem der Ansprüche 1 oder 2, **dadurch gekennzeichnet, dass** die Wasserführungsbereiche (17, 24) Ablaufschrägen (20) aufweisen, welche das Wasser zu den Wasserablauföffnungen (15) im unteren Teil des vom Türinnenblech (11) und Türaußenblech (10) gebildeten Türkastens leiten.

## Claims

1. Vehicle door with an outer door panel, an inner door panel that is connected with the outer door panel, a window lifter module and a door trim panel located above the inner door panel and the window lifter module, **characterised in that** a flat foam section (13) made of closed cell foam that can also be laminated is located between the inner door panel (11) and the window lifter module (16) on one side and the inner door trim (12) on the other side and **in that** the foam section (13) features water duct areas (14, 17, 20, 24) that guide water present on the foam section (13) to water drain openings (15) at the bottom edge of the door, whereby the water duct areas are designed as corrugations (14, 17) of the foam section (13) and as foam sections that are partially punched out (24), which are connected to the foam section (13) in a pivoted manner.

2. Vehicle door in accordance with claim 1, **characterised in that** the water duct areas (14, 17, 20, 24) are moulded to the flat foam section (13).

3. Vehicle door in accordance with either claim 1 or 2, **characterised in that** the water duct areas (17, 24) feature slanted drainage channels (20) that guide the water to the water drainage openings (15) in the lower part of the door box formed by the inner door panel (11) and the outer door panel (10).

## Revendications

1. Porte de véhicule avec un panneau de porte extérieur, un panneau de porte intérieur relié au panneau de porte extérieur, un module de lève-vitre et un garnissage de porte intérieur disposé au-dessus du panneau de porte intérieur et du module de lève-vitre, **caractérisée en ce qu'**un élément de grande surface en mousse synthétique à alvéoles fermées (13), pouvant également être cachée, est disposé entre le panneau de porte intérieur (11) et le module de lève-vitre (16) d'un côté et le garnissage de porte intérieur (12) de l'autre côté et **en ce que** l'élément en mousse synthétique (13) présente des zones de guidage d'eau (14, 17, 20, 24) véhiculant l'eau présente sur l'élément en mousse synthétique (13) vers des orifices d'écoulement d'eau (15) au niveau du bord inférieur de la porte, les zones de guidage d'eau étant réalisées sous forme d'empreintes (14, 17) dans l'élément en mousse synthétique (13) et sous forme d'éléments en mousse synthétique (24) partiellement estampés, qui sont reliés de manière pivotante à l'élément en mousse synthétique (13).

2. Porte de véhicule selon la revendication 1, **caractérisée en ce que** les zones de guidage d'eau (14, 17, 20, 24) sont façonnées dans l'élément en mousse synthétique (13) de grande surface.

3. Porte de véhicule selon une des revendications 1 ou 2, **caractérisée en ce que** les zones de guidage d'eau (17, 24) présentent des déclivités d'écoulement (20) permettant de véhiculer l'eau vers les orifices d'écoulement d'eau (15) dans la partie inférieure du caisson de porte formé par le panneau de porte intérieur (11) et le panneau de porte extérieur (10).
